# EUROPEAN PATENT SPECIFICATION

(11) **EP 2 605 072 B1**
(45) Date of publication and mention of the grant of the patent: **28.06.2017**
(21) Application number: 11816204.9
(22) Date of filing: 30.06.2011
(51) Int. Cl.: G03G 15/02

(54) **CHARGING MEMBER, METHOD FOR PRODUCING SAME, PROCESS CARTRIDGE, AND ELECTROPHOTOGRAPHIC DEVICE**
LADEELEMENT, VERFAHREN ZU SEINER HERSTELLUNG, PROZESSKARTUSCHE UND ELEKTROFOTOGRAFISCHE VORRICHTUNG
ÉLÉMENT DE CHARGEMENT, PROCÉDÉ POUR SA PRODUCTION, CARTOUCHE DE TRAITEMENT ET DISPOSITIF ÉLECTROPHOTOGRAPHIQUE

(30) Priority: 09.08.2010 JP 2010178735
(43) Date of publication of application: 19.06.2013
(73) Proprietor: Canon Kabushiki Kaisha, Tokyo 146-8501 (JP)
(72) Inventor: SUZUMURA, Noriko, Tokyo 146-8501 (JP); KURODA, Noriaki, Tokyo 146-8501 (JP)
(74) Representative: TBK
(86) International application number: PCT/JP2011/003744
(87) International publication number: WO 2012/020534

(56) References cited:
- EP-A1- 1 789 854
- EP-A2- 0 510 643
- JP-A- 5 150 617
- JP-A- 10 176 111
- JP-A- 2006 293 004
- JP-A- 2006 293 004
- JP-A- 2011 137 109
- JP-A- 2011 138 052
- US-A1- 2010 135 695

## Description

### Technical Field

The present invention relates to a charging member for use in an electrophotographic apparatus, and a process cartridge.

### Background Art

A charging member for charging the surface of an electrophotographic photosensitive member generally has a support, an elastic layer (conductive elastic layer) provided on the support, and a surface layer provided on the elastic layer from such a viewpoint that an abutment nip between the electrophotographic photosensitive member and the charging member is sufficiently secured.

Patent Literature 1 discloses a charging member provided with a surface layer obtained by dispersing, for example, a metal oxide such as zirconium oxide and titanium oxide, or a composite oxide such as barium titanate in a binder as a charging member capable of preventing the occurrence of a charging failure under a low-temperature, low-humidity environment. In addition, Patent Literature 2 discloses a charging member provided with a surface layer containing a polysiloxane having a fluorinated alkyl group and an oxyalkylene group as a charging member capable of suppressing the adhesion of dirt to the surface of the charging member and of maintaining stable charging performance over a long time period. As described above, various functions such as an improvement in the charging performance of a charging member and improvements in its surface characteristics have been imparted to the surface layer of the charging member. By the way, a charging member that exerts stably high charging performance under assorted environments ranging from a high-temperature, high-humidity environment to a low-temperature, low-humidity environment has started be requested in view of the fact that a recent electrophotographic apparatus is used under such environments.

### Citation List

### Patent Literature

PTL 1: Japanese Patent Application Laid-Open No. H 06-159349
PTL 2: Japanese Patent Application Laid-Open No. 2007-004102

JP2006293004 (A) discloses an electrophotographic apparatus forming an electrostatic latent image by electrifying an image forming body and discharging it with a laser beam, forming a toner image by supplying toner onto the image forming body, and transferring the toner image to paper. In the electrophotographic apparatus, the electrifying roller for electrifying the image forming body has a conductive core shaft, a conductive layer and one or more coating layers around the core shaft. The surface layer contains fine particles of titanium oxide comprising, as the main component, TiO₂ component and Ti(OR)ₘ(OH)ₙ component, wherein R represents a hydrocarbon radical, m and n each represent an integer of 0 to 4, and m+n is four.

### Summary of Invention

### Technical Problem

Under such circumstances, the inventors of the present invention have conducted investigations on an improvement in the relative dielectric constant of a surface layer with a view to improving the charging performance of a charging member. The dielectric constant of titanium oxide incorporated into the surface layer according to Patent Literature 1 is about 100, which is high as compared with the relative dielectric constant of silicon dioxide (about 4.0). Accordingly, it has been assumed that the incorporation of titanium oxide particles is preferred for obtaining a surface layer having a high relative dielectric constant. However, the formation of a surface layer in which the titanium oxide particles exist while being uniformly dispersed requires that the titanium oxide particles be dispersed in a coating agent (coating solution) to be used in the formation of the surface layer to a physically high degree. The preparation of such coating agent is costly and the resultant coating agent is not suitable for long-term storage. In addition, even though the titanium oxide particles can be uniformly dispersed in the surface layer, the following problem arises. The titanium oxide particles are not necessarily fixed by the binder in the surface layer to a sufficient extent, and hence the particles are apt to fall out of the surface layer owing to long-term use of the charging member.

Further, the surface free energy of the surface layer obtained by dispersing the titanium oxide particles tends to increase, and hence there has been room for improvement from the viewpoint of the suppression of the adhesion of dirt to the surface. In view of the foregoing, the present invention is directed to provide a charging member capable of maintaining high charging performance over a long time period by including a surface layer having a high relative dielectric constant and a small surface free energy, and a method of producing the member. Further, the present invention is directed to provide a process cartridge and an electrophotographic apparatus capable of forming high-quality electrophotographic images over a long time period.

### Solution to Problem

According to one aspect of the present invention, there is provided a charging member as defined in claim 1. According to another aspect of the present invention, there is provided a method of producing a charging member comprising a support, an elastic layer, and a surface layer as defined in claim 5.

According to further aspect of the present invention, there is provided an electrophotographic apparatus, comprising: an electrophotographic photosensitive member; and the above-described charging member placed to contact the electrophotographic photosensitive member. According to still further aspect of the present invention, there is provided a process cartridge, comprising: an electrophotographic photosensitive member; and the above-described charging member placed to contact the electrophotographic photosensitive member, wherein the process cartridge is formed to be detachable from a main body of an electrophotographic apparatus.

### Advantageous Effects of Invention

The charging member of the present invention can maintain its high relative dielectric constant over a long time period because titanium oxide having a high relative dielectric constant is strongly held as a reaction product (cured product) with the hydrolyzable silane compound in the surface layer. In addition, the surface layer can suppress the adhesion of a dirt component because of its small surface free energy. The process cartridge and the electrophotographic apparatus each including the charging member are effective in increasing a printing speed and lengthening the lifetime of the electrophotographic apparatus.

### Brief Description of Drawings

FIG. 1 is a view illustrating an example of the construction of a charging member of the present invention.
FIG. 2 is an explanatory diagram of an electrophotographic apparatus according to the present invention.
FIG. 3 is an explanatory diagram of a chemical reaction at the time of the formation of a surface layer according to the present invention.

### Description of Embodiments

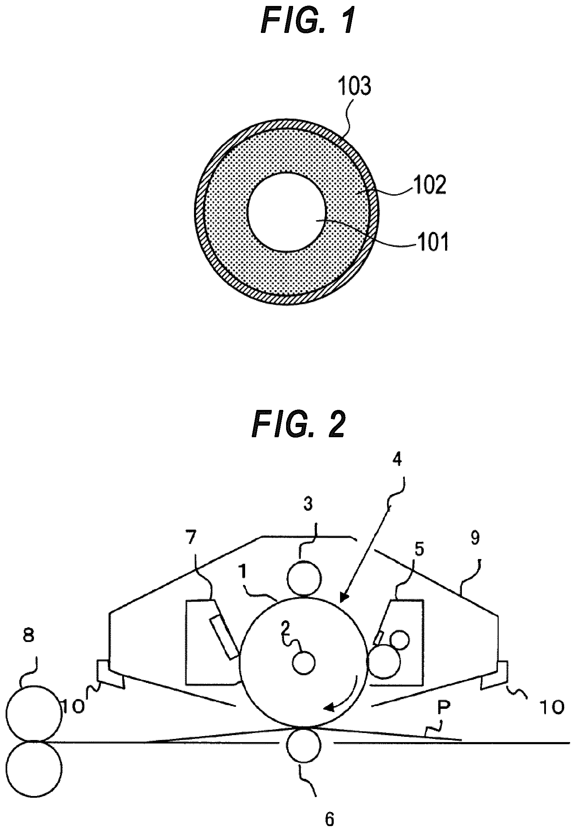

A charging member according to the present invention illustrated in FIG. 1 is such that a support 101, a conductive elastic layer 102, and a surface layer 103 are laminated in the stated order. One or two or more other layers may be provided in the foregoing as a basic structure between the support and the conductive elastic layer or between the conductive elastic layer and the surface layer.

### (Support)

A metallic (alloy) support formed of iron, copper, stainless steel, aluminum, an aluminum alloy, or nickel can be used as the support.

### (Elastic layer)

One kind or two or more kinds of elastic bodies such as rubbers and thermoplastic elastomers used in the elastic layers (conductive elastic layers) of the conventional charging members can each be used for the conductive elastic layer.

Examples of the rubbers include the following: a urethane rubber, a silicone rubber, a butadiene rubber, an isoprene rubber, a chloroprene rubber, a styrene-butadiene rubber, an ethylene-propylene rubber, a polynorbornene rubber, a styrene-butadiene-styrene rubber, an acrylonitrile rubber, an epichlorohydrin rubber, and an alkyl ether rubber.

The thermoplastic elastomer is, for example, a styrene-based elastomer or an olefin-based elastomer. A commercially available product of the styrene-based elastomer is, for example, "RABALON" (trade name, manufactured by Mitsubishi Chemical Corporation) or "SEPTON compound" (trade name, manufactured by KURARAY CO., LTD.). A commercially available product of the olefin-based elastomer is, for example, "Thermolan" (trade name, manufactured by Mitsubishi Chemical Corporation), "Milastomer" (trade name, manufactured by Mitsui Chemicals, Inc.), "Sumitomo TPE" (trade name, manufactured by Sumitomo Chemical Co., Ltd.), or "Santoprene" (trade name, Advanced Elastomer Systems, L.P.).

In addition, the elastic layer is constructed so as to have a predetermined conductivity by incorporating a conductive agent. The electrical resistance of the elastic layer is preferably from 10² Ω to 10⁸ Ω, particularly preferably from 10³ Ω to 10⁶ Ω. Examples of the conductive agent to be used in the elastic layer include a cationic surfactant, an anionic surfactant, an antistatic agent, and an electrolyte.

Examples of the cationic surfactant include quaternary ammonium salts (quaternary ammonium salts such as lauryltrimethylammonium, stearyltrimethylammonium, octadodecyltrimethylammonium, dodecyltrimethylammonium, hexadecyltrimethylammonium, and modified fatty acid-dimethylethylammonium), perchloric acid salts, chloric acid salts, fluoroboric acid salts, ethosulfate salts, and halogenated benzyl salts (such as a benzyl bromide salt and a benzyl chloride salt).

Examples of the anionic surfactant include an aliphatic sulfonic acid salt, a higher alcohol sulfuric acid ester salt, a higher alcohol ethylene oxide adduct sulfuric acid ester salt, a higher alcohol phosphoric acid ester salt, and a higher alcohol ethylene oxide adduct phosphoric acid ester salt.

Examples of the antistatic agent include non-ionic antistatic agents such as a higher alcohol ethylene oxide, a polyethylene glycol fatty acid ester, and a polyhydric alcohol fatty acid ester.

Examples of the electrolyte include salts (such as quaternary ammonium salts) of metals of the first group of the periodic table (such as Li, Na, and K). Specific examples of the salts of metals of the first group of the periodic table include LiCF₃SO₃, NaClO₄, LiAsF₆, LiBF₄, NaSCN, KSCN, and NaCl.

In addition, as the conductive agent for the elastic layer, there may also be used salts (e.g., Ca(ClO₄)₂) of metals of the second group of the periodic table (such as Ca and Ba) and antistatic agents derived therefrom as well. Alternatively, an ion conducting conductive agent such as a complex of any such conductive agent with a polyhydric alcohol (such as 1,4-butanediol, ethylene glycol, polyethylene glycol, propylene glycol, and polyethylene glycol) or a derivative thereof, or a complex of any such conductive agent with a monool (such as ethylene glycol monomethyl ether and ethylene glycol monoethyl ether) may be used.

In addition, as the conductive agent for the elastic layer, there may also be used carbon-based materials (such as conductive carbon black and graphite), metal oxides (such as tin oxide, titanium oxide, and zinc oxide), and metals (such as nickel, copper, silver, and germanium).

The conductive elastic layer has an MD-1 hardness of preferably from 60° to 85°, more preferably from 70° to 80° in particular, from such a viewpoint that the deformation of the charging member is suppressed when the charging member and an electrophotographic photosensitive member as a body to be charged are brought into abutment with each other. In addition, the charging member is preferably of the so-called crown shape in which the thickness of the central portion in its width direction is larger than the thicknesses of both of its ends in order that the charging member may be uniformly brought into abutment with the photosensitive member in the width direction.

### (Surface layer)

The surface layer of the charging member is formed of a cured product layer of a coating agent containing a reaction product between a hydrolyzable silane compound and titanium oxide particles having hydroxyl groups on their surfaces at a content of from 0.7 mass% to 35 mass%. Setting the content of the hydroxyl groups within the above-mentioned range enables sufficient bonding of the titanium oxide particles and the hydrolyzable silane compound. As a result, the separation, precipitation, and the like of the titanium oxide fine particles in the coating agent for the formation of the surface layer hardly occur. In addition, the surface free energy of the surface layer to be obtained can be reduced with additional reliability. It should be noted that a content of the hydroxyl groups in excess of 35 mass% means a reduction in the number of Ti-O-Ti bonds, which prevents titanium oxide from maintaining its crystal structure and weakens its increasing effect on the relative dielectric constant of the charging member.

### (Surface treatment of titanium oxide fine particles)

Hydroxyl groups can be introduced to the surfaces of the titanium oxide fine particles by subjecting the titanium oxide fine particles to an alkali treatment and an acid treatment or to the acid treatment. As a guide, the particle diameter of the titanium oxide fine particles to be subjected to any such surface treatment is from 0.050 µm to 0.600 µm.

Specific examples of the titanium oxide fine particles are described below.
(T-1) MT-150A (TAYCA CORPORATION)
(T-2) MT-500B (TAYCA CORPORATION)
(T-3) MT-600B (TAYCA CORPORATION)
(T-4) TTO-55N (ISHIHARA SANGYO KAISHA, LTD.)
(T-5) TTO-51N (ISHIHARA SANGYO KAISHA, LTD.)
(T-6) STR-60N (Sakai Chemical Industry Co., Ltd.)
(T-7) STR-100N (Sakai Chemical Industry Co., Ltd.)

A reagent to be used in the alkali treatment is preferably an alkaline aqueous solution of sodium hydroxide, potassium hydroxide, ammonia water. The concentration of the solution to be used is desirably 0.005 mol/L or more, more desirably from 0.01 mol/L to 1.00 mol/L in particular. The alkaline aqueous solution is added to such an extent that the titanium oxide fine particles are sufficiently immersed therein, and then the fine particles are dispersed by stirring. Heating with a water bath, an oil bath, or the like is preferably performed at the time of the alkali treatment, and in particular, the temperature is more preferably set to from 40°C to 100 °C. The treatment time is preferably 1 hour or more. Water washing is performed after the alkali treatment has been performed.

A reagent to be used in the acid treatment is preferably selected from acidic aqueous solutions of hydrochloric acid, nitric acid, sulfuric acid, acetic acid. The concentration of the solution to be used is desirably 0.01 mol/L or more, more desirably from 0.1 mol/L to 3 mol/L in particular. The acidic aqueous solution is added to such an extent that the titanium oxide fine particles or the titanium oxide fine particles subjected to the alkali treatment are sufficiently immersed therein, and then the fine particles are dispersed by stirring. Heating with a water bath, an oil bath, or the like is preferably performed at the time of the acid treatment, and in particular, the temperature is more preferably set to from 40°C to 100°C. The treatment time is preferably 1 hour or more, and water washing is performed after the treatment. The acid treatment and the water washing are each performed preferably multiple times, more preferably twice to four times in particular.

The titanium oxide fine particles subjected to the alkali treatment and the acid treatment or to the acid treatment as described in the foregoing are air-dried and then pulverized with an agate mortar or the like.

### (Hydrolysis/condensation reaction)

Next, the titanium oxide fine particles subjected to any such surface treatment as described in the foregoing so that the hydroxyl groups may be introduced to their surfaces, water, and an alcohol are added to the hydrolyzable silane compound, and then the mixture is stirred while being refluxed under heating. Thus, the hydrolyzable silane compound is hydrolyzed so that an alkoxy group may be turned into a hydroxyl group. Then, the hydroxyl group is caused to react with a hydroxyl group on the surfaces of the titanium oxide fine particles.

Here, a ratio (Si/Ti) of the number of Si atoms to the number of Ti atoms is preferably from 0.5 to 10, more preferably from 0.5 to 2.0 in particular. As long as the ratio is 0.5 or more, the titanium oxide fine particles sufficiently react with the hydrolyzable silane compound, and hence there is no possibility that the fine particles peel off owing to rubbing. In addition, as long as the ratio is 10 or less, the increasing effect of titanium oxide on the relative dielectric constant can be sufficiently achieved.

As the hydrolyzable silane compound, there are used one or more kinds selected from compounds represented by the following formulae (1) and (2), at least one kind thereof being a hydrolyzable silane compound represented by the formula (1).

[Chem. 1] Formula (1) R¹-Z-Si-(OR²)₃ Formula (2) R³-Si-(OR⁴)₃

In the above-mentioned formula (1), R¹ represents a cationic polymerizable organic group, Z represents a divalent organic group, R² and R⁴ each independently represent a saturated or unsaturated hydrocarbon group, and R³ represents a substituted or unsubstituted alkyl or aryl group. The cationic polymerizable organic group represented by R¹ in the formula (1) means a cationic polymerizable organic group that produces an oxyalkylene group by cleavage, and examples of the group include cyclic ether groups such as an epoxy group and an oxetane group, and a vinyl ether group. Of those, an epoxy group is preferred from the viewpoints of ease of availability and the ease with which the reaction is controlled.

Examples of the divalent organic group represented by Z in the formula (1) include alkylene groups and arylene groups. Of those, an alkylene group having 1 to 6 carbon atoms is preferred, and an ethylene group is more preferred.

Examples of the saturated or unsaturated, monovalent hydrocarbon group represented by each of R² and R⁴ in the formula (1) include alkyl groups, alkenyl groups, and aryl groups. Of those, a linear or branched alkyl group having 1 to 4 carbon atoms is preferred, and a methyl group, an ethyl group, an n-propyl group, an i-propyl group, an n-butyl group, or a t-butyl group is more preferred.

Specific examples of the hydrolyzable silane compound having a structure represented by the formula (1) are described below.
(1-1): Glycidoxypropyltrimethoxysilane
(1-2): Glycidoxypropyltriethoxysilane
(1-3): Epoxycyclohexylethyltrimethoxysilane
(1-4): Epoxycyclohexylethyltriethoxysilane

The alkyl group substituted with an aryl group or unsubstituted alkyl group represented by R³ in the formula (2) is preferably a linear alkyl group having 1 to 21 carbon atoms, more preferably one having 6 to 10 carbon atoms. The aryl group substituted with an alkyl group or unsubstituted aryl group represented by R³ in the formula (2) is preferably a phenyl group.

Specific examples of the hydrolyzable silane compound having a structure represented by the formula (2) are described below.
(2-1): Methyltrimethoxysilane
(2-2): Methyltriethoxysilane
(2-3): Methyltripropoxysilane
(2-4): Ethyltrimethoxysilane
(2-5): Ethyltriethoxysilane
(2-6): Ethyltripropoxysilane
(2-7): Propyltrimethoxysilane
(2-8): Propyltriethoxysilane
(2-9): Propyltripropoxysilane
(2-10): Hexyltrimethoxysilane
(2-11): Hexyltriethoxysilane
(2-12): Hexyltripropoxysilane
(2-13): Decyltrimethoxysilane
(2-14): Decyltriethoxysilane
(2-15): Decyltripropoxysilane
(2-16): Phenyltrimethoxysilane
(2-17): Phenyltriethoxysilane
(2-18): Phenyltripropoxysilane

When a hydrolyzable silane compound having a structure represented by the formula (2) is used in combination, a hydrolyzable silane compound in which R³ represents a phenyl group and a hydrolyzable silane compound in which R³ represents a linear alkyl group having 6 to 10 carbon atoms are more preferably combined because the compatibility of any such monomer with a solvent is satisfactory even when its structure changes owing to a hydrolysis/condensation reaction.

In addition, the addition amount (mol) of water is preferably from 3.0 times to 9.0 times as large as the number of moles of the hydrolyzable silane compound to be added. In particular, the addition amount is more preferably from 3.5 times to 6.0 times as large as the number of moles. As long as the addition amount falls within the range, an unreacted monomer hardly remains, the reaction does not progress excessively, and hence a uniform, transparent solution can be obtained. In addition, when the amount of water is large, compatibility between the alcohol and the condensate deteriorates, and hence there is a tendency that the solution is apt to be opaque or to produce a precipitate as in the foregoing.

In addition, a primary alcohol, a secondary alcohol, or a tertiary alcohol, a mixed system of a primary alcohol and a secondary alcohol, or a mixed system of a primary alcohol and a tertiary alcohol is preferably used as the alcohol. In particular, ethanol, a mixed solution of methanol and 2-butanol, or a mixed solution of ethanol and 2-butanol is preferably used.

### (Preparation of coating agent)

A coating agent is prepared by adding a photopolymerization initiator to the reaction product (hydrolysate/condensate) synthesized as described above. The concentration of the coating agent is adjusted with a proper solvent in order that its application property may be improved. Examples of the solvent include alcohols such as ethanol and 2-butanol, ethyl acetate, methyl ethyl ketone, and mixtures thereof.

An onium salt of a Lewis acid or Bronsted acid is preferably used as the photopolymerization initiator. Any other cationic polymerization catalyst is, for example, a borate, a compound having an imide structure, a compound having a triazine structure, an azo compound, and a peroxide.

It should be noted that the photopolymerization initiator can be added in the form of a diluted solution prepared in advance with a solvent such as an alcohol and a ketone in order that its compatibility with the hydrolysate/condensate may be improved. Examples of the solvent include methanol and methyl isobutyl ketone.

Of the various cationic polymerization catalysts, an aromatic sulfonium salt or an aromatic iodonium salt is preferred from the viewpoints of sensitivity, stability, and reactivity. In particular, a bis(4-tert-butylphenyl)iodonium salt, a compound having a structure represented by the following formula (3) (trade name: "Adekaoptomer SP150", manufactured by ADEKA CORPORATION), or a compound having a structure represented by the following formula (4) (trade name: "IRGACURE 261", manufactured by Ciba Specialty Chemicals Inc.) is more preferred.
[Chem. 2] 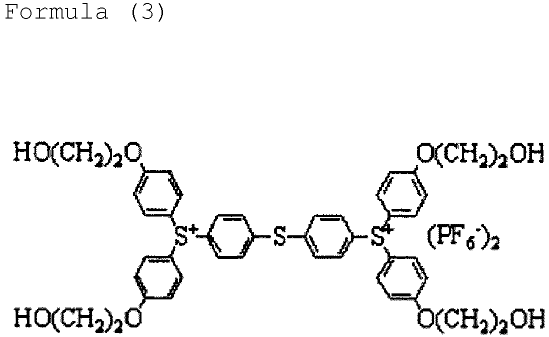 [Chem. 3]

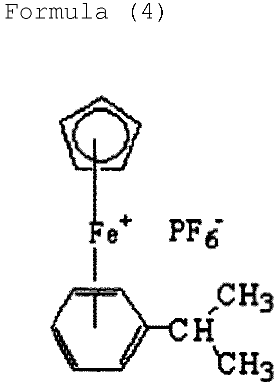

### (Formation of surface layer)

The coating agent thus prepared is applied onto the conductive elastic layer by, for example, application with a roll coater, immersion application, or ring application so that a coating layer may be formed. When the coating layer is irradiated with an activation energy ray, a cationic polymerizable group in the silane hydrolyzable condensate in the coating agent cleaves to polymerize. Thus, the molecules of the silane hydrolyzable condensate crosslink to cure so that the surface layer may be formed.

Ultraviolet light is preferred as the activation energy ray. When the surface layer is cured with UV light, excess heat is hardly generated, a phase separation or wrinkle during the volatilization of the solvent like heat curing hardly occurs, and hence an extremely uniform film state is obtained. Accordingly, a uniform, stable potential can be provided for a photosensitive member.

When the environment under which the charging member is placed is an environment whose temperature and humidity change abruptly, a wrinkle or crack may be generated in the surface layer unless the surface layer sufficiently follows the expansion and contraction of the conductive elastic layer due to the temperature and humidity changes. However, when the crosslinking reaction is performed with UV light that results in the generation of a small quantity of heat, adhesiveness between the conductive elastic layer and the surface layer is improved, and hence the surface layer becomes able to sufficiently follow the expansion and contraction of the conductive elastic layer. Accordingly, a crimp or crack in the surface layer due to changes in the temperature and humidity of an environment can be suppressed.

In addition, when the crosslinking reaction is performed with UV light, the deterioration of the conductive elastic layer due to thermal hysteresis can be suppressed. Accordingly, reductions in the electrical characteristics of the conductive elastic layer can also be suppressed.

A high-pressure mercury lamp, a metal halide lamp, a low-pressure mercury lamp, an excimer UV lamp, or the like can be used for the irradiation of UV light. Of those, an UV light source rich in UV light having a wavelength of from 150 nm to 480 nm is used.

It should be noted that the integral light quantity of UV light is defined as described below.
UV integral light quantity [mJ/cm²]=UV light intensity [mW/cm²]×irradiation time [s]
The integral light quantity of UV light can be adjusted depending on, for example, the irradiation time, a lamp output, and a distance between the lamp and a body to be irradiated. In addition, the integral light quantity may be provided with a gradient within the irradiation time.

When a low-pressure mercury lamp is used, the integral light quantity of UV light can be measured with a UV integral actinometer "UIT-150-A" or "UVD-S254" (both are trade names, manufactured by USHIO INC.). Further, when an excimer UV lamp is used, the integral light quantity of UV light can be measured with a UV integral actinometer "UIT-150-A" or "VUV-S172" (both are trade names, manufactured by USHIO INC.).

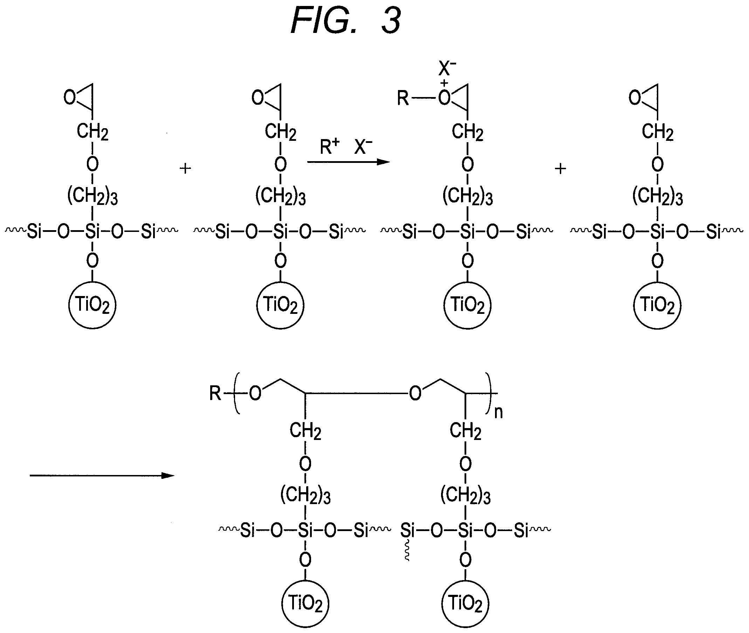

FIG. 3 illustrates a reaction scheme in the step of forming the surface layer. The coating solution applied to the surface of the elastic layer contains, as a hydrolyzable condensate, a silane compound having a glycidoxypropyl group as a cationic polymerizable group and chemically bonded to the titanium oxide particles. The epoxy ring of the glycidoxypropyl group of such hydrolyzable condensate opens in the presence of a cationic polymerization catalyst (described as R⁺X⁻in FIG. 3) to polymerize in a chain fashion. As a result, the surface layer formed of a polysiloxane to which the titanium oxide fine particles are bonded is formed. It should be noted that n in FIG. 3 represents an integer of 1 or more. As described above, in the surface layer according to the present invention, the titanium oxide fine particles are chemically bonded to the polysiloxane instead of merely existing in the binder while being dispersed therein. Accordingly, the titanium oxide fine particles hardly fall out of the surface layer.

The elastic modulus of the surface layer of the charging member is preferably 10 GPa or less from such a viewpoint that the function of the conductive elastic layer provided for sufficiently securing the abutment nip with the electrophotographic photosensitive member is sufficiently exerted. On the other hand, a crosslink density generally tends to reduce as the elastic modulus of the layer is made smaller. Accordingly, the elastic modulus of the surface layer of the charging member is preferably 0.1 GPa or more from the viewpoint of the suppression of the contamination of the surface of the electrophotographic photosensitive member due to a low-molecular weight component that has bled out to the surface of the charging member.

In addition, the surface layer exerts a larger suppressing effect on the bleedout of the above-mentioned low-molecular weight component as its thickness becomes larger. On the other hand, the charging performance of the charging member reduces as the thickness of the surface layer becomes larger. Accordingly, as a guide, the thickness of the surface layer is preferably from 0.005 µm to 1.000 µm, particularly preferably from 0.010 µm to 0.600 µm. Setting the thickness of the surface layer within the above-mentioned range can quicken the volatilization of the solvent in the coating agent upon formation of the surface layer, and hence suppressing effects on the occurrence of variations in the thickness and physical properties of the surface layer are obtained. Further, a phase separation that may occur upon drying of a thick film containing a mixture in an incompatible state hardly occurs.

The thickness of the surface layer can be identified by shaving the surface portion of the charging member with a razor, immersing the portion in liquid nitrogen to rupture the portion, and observing a section of the ruptured product with a scanning electron microscope (SEM) (manufactured by JEOL Ltd.) at a magnification of about 20,000.

In addition, the surface (surface of the surface layer) of the charging member has a ten-point average roughness (Rzjis) of preferably 10 µm or less, in particular 7 µm or less, more preferably from 3 µm to 5 µm from the viewpoint of the suppression of the sticking of toner or an external additive to the surface of the charging member.

When the charging member is used for a long time period or is used with its process speed increased, toner or an external additive in the toner is apt to stick to its surface. As a result, charging unevenness occurs and a fine, line-like image failure appears upon output of an image.

The formation of a surface layer having no affinity for the sticking component is effective in preventing the sticking, and a surface free energy is used as an indicator for the degree of sticking in the present invention. It has been found from Patent Literature 2 described in the foregoing or the like that lowering the surface free energy raises the difficulty with which the toner or the like sticks. The lower the surface free energy, the better. Specifically, the surface free energy is preferably 30 mJ/m² or less, particularly preferably 25 mJ/m² or less.

It should be noted that the range does not apply when the kind of the toner is changed because the degree of sticking varies depending on an affinity between the sticking component and the charging member. The range described in the foregoing is regarded as being preferred because the surface free energy of toner used in a cartridge for evaluation in the present invention is about 40 mJ/m².

A lower limit for the relative dielectric constant of the charging member according to the present invention is preferably 8 or more, particularly preferably 10 or more. In addition, an upper limit for the relative dielectric constant is the relative dielectric constant of titanium oxide (100) or less.

### (Process cartridge and electrophotographic apparatus)

FIG. 2 illustrates an example of the schematic construction of an electrophotographic apparatus including a process cartridge having the charging member of the present invention. In FIG. 2, a cylindrical electrophotographic photosensitive member 1 is rotationally driven about an axis 2 in the direction indicated by an arrow at a predetermined circumferential speed. The electrophotographic photosensitive member generally has a support and an inorganic photosensitive layer or an organic photosensitive layer formed on the support. In addition, the electrophotographic photosensitive member may have a charge-injecting layer as its surface layer. The surface of the electrophotographic photosensitive member 1 is uniformly charged to a positive or negative predetermined potential because a charging member 3 (roller-shaped charging member in FIG. 2) of the present invention is placed so as to contact the surface of the electrophotographic photosensitive member 1. Next, the surface of the electrophotographic photosensitive member 1 receives exposure light (image exposure light) 4 output from an exposing unit (not shown) such as slit exposure and laser beam scanning exposure. Thus, electrostatic latent images corresponding to the target image are sequentially formed on the surface of the electrophotographic photosensitive member 1.

Upon charging of the surface of the electrophotographic photosensitive member 1 by the charging member 3, a voltage formed only of a DC voltage or a voltage obtained by superimposing an AC voltage on the DC voltage is applied from a voltage-applying unit (not shown) to the charging member 3. In examples to be described later, a voltage (-1,000 V) formed only of a DC voltage was applied to the charging member. In addition, in the examples to be described later, a dark portion potential and a light portion potential were set to -500 V and -100 V, respectively.

The electrostatic latent images formed on the surface of the electrophotographic photosensitive member 1 are each subjected to development (reversal development or normal development) with toner in a developer of a developing unit 5. Thus, toner images are obtained. Next, the toner images formed on and carried by the surface of the electrophotographic photosensitive member 1 are sequentially transferred onto a transfer material (such as paper) P by a transferring bias from a transferring unit (such as a transfer roller) 6. It should be noted that the transfer material P is taken out of a transfer material-supplying unit (not shown) and fed into a gap between the electrophotographic photosensitive member 1 and the transferring unit 6 (abutting portion) in synchronization with the rotation of the electrophotographic photosensitive member 1.

Examples of the developing unit include a jumping developing unit, a contact developing unit, and a magnetic brush unit. Of those, the contact developing unit is preferred from the viewpoint of an improvement in the flying performance of the toner. In the examples to be described later, the contact developing unit was adopted. In addition, the transfer roller is, for example, one obtained by covering the top of a support with an elastic resin layer with its resistance adjusted to a moderate level. The transfer material P onto which the toner image has been transferred is separated from the surface of the electrophotographic photosensitive member 1 to be introduced to a fixing unit 8 where the image is fixed. Thus, the transfer material is printed out as an image-formed product (print or copy) to the outside of the apparatus. In the case of a duplex image formation mode or a multiplex image formation mode, the image-formed product is introduced to a recirculation conveying mechanism (not shown) to be introduced to a transferring portion again. A transfer residual developer (toner) is removed from the surface of the electrophotographic photosensitive member 1 after the transfer of the toner image by a cleaning unit (such as a cleaning blade) 7 so that the surface may be cleaned. Further, the surface is subjected to an antistatic treatment by pre-exposure (not shown) from a pre-exposing unit (not shown) before being repeatedly used in image formation. It should be noted that the pre-exposure is not necessarily needed when a charging unit is a contact charging unit. A process cartridge can be formed by storing a container with multiple components out of the above-mentioned components including the electrophotographic photosensitive member 1, the charging member 3, the developing unit 5, the transferring unit 6, and the cleaning unit 7, and integrally supporting the multiple components. In addition, the process cartridge may be formed so as to be removable from the main body of an electrophotographic apparatus such as a copying machine and a laser beam printer. In FIG. 2, the electrophotographic photosensitive member 1, the charging member 3, the developing unit 5, and the cleaning unit 7 are integrally supported to turn into a cartridge, and the cartridge is caused to serve as a process cartridge 9 removable from the main body of an electrophotographic apparatus by using a guiding unit 10 such as a rail of the main body of the electrophotographic apparatus.

### Examples

Hereinafter, the present invention is described in more detail by way of specific examples. It should be noted that the term "part(s)" in the examples refers to "part(s) by mass".

### Synthesis Example A; production example of titanium oxide particles

### (Synthesis Example A-1)

7 Grams of titanium oxide fine particles (MT-500B, TAYCA CORPORATION, average particle diameter: 35 nm) were added to 300 g of an aqueous solution of sodium hydroxide with its concentration adjusted to 0.02 mol/L. After having been stirred at 70°C for 12 hours, the mixture was cooled to room temperature and washed with distilled water. After the resultant had been filtrated, the resultant was dried in an oven at 100°C overnight, and was then pulverized with an agate mortar. Subsequently, 5 g of the titanium oxide fine particles subjected to the alkali treatment described in the foregoing were added to 150 g of a 1-mol/L aqueous solution of nitric acid. The mixture was stirred at 70°C for 2 hours, cooled to room temperature, and washed with distilled water. The acid treatment was repeated three times, and then the resultant was filtrated. After that, the resultant was dried in an oven at 100°C overnight, and was then pulverized with an agate mortar. The titanium oxide fine particles after the acid treatment are referred to as "titanium oxide particles No. 1."

### [Evaluation A1] Crystallinity

The resultant titanium oxide particles No. 1 were evaluated for their crystallinity with an X-ray diffractometer (trade name; RINT TTR II, manufactured by RIGAKU Corporation). The particles were evaluated for whether their crystal structures were maintained even after the treatment with the alkali or the acid on the basis of the intensity of the X-ray diffraction pattern of a rutile type crystal through comparison with untreated titanium oxide fine particles by the following criteria.
A; 80 to 100% of the detected intensity is maintained.
B; 40 to 79% of the detected intensity is maintained.
C; 0 to 39% of the detected intensity is maintained.

[Evaluation A2] Measurement of content of hydroxyl groups on surfaces of titanium oxide particles A weight loss when the titanium oxide particles No. 1 were heated was measured with a thermal analyzer (trade name; Thermo plus TG8120, manufactured by RIGAKU Corporation). The content of hydroxyl groups of the titanium oxide particles No. 1 was calculated by regarding a weight loss at 150°C or more as the elimination of water die to the dehydration condensation of the hydroxyl groups. The measurement was performed under a nitrogen atmosphere as described below. The temperature of the particles was increased to 150°C at 10°C per minute, and then the temperature was held at 150°C for 1 hour. Next, the temperature was increased from 150°C to a temperature of 500°C at 5°C per minute, and then the temperature was held at 500°C for 1 hour.

### (Synthesis Example A-2)

Titanium oxide particles No. 2 were synthesized and evaluated under the same conditions as those of Synthesis Example A-1 described above except that conditions for the alkali treatment and the acid treatment in Synthesis Example A-1 were changed as described below. The concentrations of the aqueous solution of sodium hydroxide and the aqueous solution of nitric acid were changed to 1.0 mol/L and 3.0 mol/L, respectively.

### (Synthesis Example A-3)

Titanium oxide particles No. 3 were synthesized and evaluated by performing the same operations as those of Synthesis Example A-1 described above except that the alkali treatment and the acid treatment in Synthesis Example A-1 were performed with a 0.01-mol/L aqueous solution of sodium hydroxide and a 0.1-mol/L aqueous solution of nitric acid, respectively.

### (Synthesis Example A-4)

Titanium oxide particles No. 4 were synthesized and evaluated in the same manner as in Synthesis Example A-1 described above except that titanium oxide fine particles (MT-150, TAYCA CORPORATION, average particle diameter: 15 nm) were used instead of the titanium oxide fine particles (MT-500B) in Synthesis Example A-1.

### (Synthesis Example A-5)

Titanium oxide particles No. 5 were synthesized and evaluated in the same manner as in Synthesis Example A-1 described above except that titanium oxide fine particles (STR-100N, Sakai Chemical Industry Co., Ltd., average particle diameter: 100 nm) were used instead of the titanium oxide fine particles (MT-500B) in Synthesis Example A-1.

### (Synthesis Example A-6)

Titanium oxide particles No. 6 were synthesized and evaluated in the same manner as in Synthesis Example A-1 described above except that no alkali treatment was performed in Synthesis Example A-1.

Table 1 below shows the results of the evaluations of the titanium oxide particles Nos. 1 to 6. In addition, Table 1 shows the result of the evaluation of the titanium oxide particles (trade name: MT-500B, manufactured by TAYCA CORPORATION) used as raw materials for the titanium oxide particles No. 1 as reference together with the foregoing results.

[Table 1]

**Table 1**

| Titanium oxide particles No. | 1 | 2 | 3 | 4 | 5 | 6 | Ref. |
|---|---|---|---|---|---|---|---|
| Crystallinity | A | A | A | A | A | A | A |
| Surface hydroxyl group content (mass%) | 1.10 | 1.52 | 0.74 | 0.81 | 0.80 | 0.71 | 0.56 |

### (Synthesis Example B) Synthesis of hydrolyzable condensate

### (Synthesis Example B-1)

Components shown in Table 2 below were mixed in a 100-ml eggplant flask, and then the mixture was stirred at room temperature for 30 minutes.
[Table 2]

**Table 2**

| | |
|---|---|
| Titanium oxide particles No. 1 | 7.32 g (91.5 mmol) |
| Glycidoxypropyltriethoxysilane (trade name: KBE-403, manufactured by Shin-Etsu Chemical Co., Ltd.) | 10.09 g (0.036 mol) |
| Hexyltrimethoxysilane (trade name: KBM-103, manufactured by Shin-Etsu Chemical Co., Ltd.) | 10.67 g (0.052 mol) |
| Ethanol (reagent grade, manufactured by KISHIDA CHEMICAL Co., Ltd.) | 36.85 g |
| Ion-exchanged water | 7.13 g |

Subsequently, the hydrolyzable silane compounds and the titanium oxide particles No. 1 were caused to react with each other by stirring the mixture while refluxing the mixture under heating in an oil bath set to 120 °C for 20 hours. Thus, a hydrolyzable condensate B-1 was obtained. The series of stirrings was performed at 500 rpm. The ratio Ti/Si was equal to 1.0.

The theoretical solid content of the hydrolyzable condensate B-1 (mass ratio of a polysiloxane polymerized product and titanium oxide to the total weight of the solution when it is assumed that all the hydrolyzable silane compounds are subjected to dehydration condensation) is 28.0 mass%. It should be noted that ion-exchanged water was added dropwise to the mixture of all the other materials that was being stirred.

The actual solid content of the hydrolyzable condensate B-1 was 29.1 mass%. The actual solid content is measured by heating several grams of the hydrolyzable condensate B-1 in an oven at 200°C for 30 minutes. The amount of an unreacted monomer (residual monomer) remaining in the hydrolyzable condensate B-1 can be calculated from a difference between the actual solid content obtained by the heating and the theoretical solid content.

### (Evaluation B) Evaluation of condensate for its solution external appearance

The hydrolyzable condensate B-1 was left at rest at room temperature for one month, and was then evaluated for its external appearance through visual observation by the following criteria. Here, when titanium oxide sufficiently reacts with the hydrolyzable silane compounds, the dispersibility of titanium oxide in the hydrolyzable condensate is kept, and hence a precipitate is hardly produced. On the other hand, when the reaction between titanium oxide and the hydrolyzable silane compounds is insufficient, a phase separation advances and the precipitate of the titanium oxide particles is produced. Therefore, the extent to which the silane compounds and titanium oxide react with each other can be easily judged by observing the external appearance of the hydrolyzable condensate after the still standing. Table 4-1 shows the result.
A; No precipitate is produced and the solution is uniformly opaque.
B; A precipitate is produced but the solution is uniformly opaque.
C; A precipitate is produced and the solution is nonuniformly opaque (its upper portion has high transparency).

### (Synthesis Examples B-4, B-6, B-7, and B-12 to B-14)

Hydrolyzable condensates B-4, B-6, B-7, and B-12 to B-14 were each prepared and evaluated in the same manner as in Synthesis Example B-1 described above except that the composition shown in Table 3 below was adopted.
[Table 3]

**Table 3**

| Hydrolyzable condensate No. | B-4 | B-6 | B-7 | B-12 | B-13 | B-14 |
|---|---|---|---|---|---|---|
| Titanium oxide particles No. 1 | - | - | - | 7.76 g (97.0 mmol) | 13.83 g (172.9 mmol) | 0.56 g (7.0 mmol) |
| Titanium oxide particles No. 2 | 11.15 g (139.4 mmol) | 4.55 g (56.9 mmol) | 1.09 g (13.6 mmol) | - | - | - |
| Glycidoxypropyltriethoxysilane | 7.68 g (0.028 mol) | 12.52 g (0.045 mol) | 15.07 g (0.054 mol) | 6.73 g (0.024 mol) | 5.71 g (0.021 mol) | 15.48 g (0.057 mol) |
| Hexyltrimethoxysilane | 8.12 g (0.039 mol) | 13.24 g (0.064 mol) | 15.93 g (0.077 mol) | 7.12 g (0.035 mol) | 6.04 g (0.029 mol) | 16.36 g (0.079 mol) |
| Phenyltriethoxysilane | - | - | - | 8.31 g (0.035 mol) | - | - |
| Ethanol | 41.59 g | 34.70 g | 31.14 g | 36.39 g | 44.38 g | 30.61 g |
| Ion-exchanged water | 5.43 g | 8.85 g | 10.65 g | 7.56 g | 4.04 g | 10.56 g |

### (Synthesis Examples B-2 and B-3)

The hydrolyzable condensates B-2 and B-3 were each prepared and evaluated by the same operations as those of Synthesis Example B-1 except that the titanium oxide particles No. 1 were changed to the titanium oxide particles No. 2 or the titanium oxide particles No. 3 in Synthesis Example B-1.

### (Synthesis Example B-5)

The hydrolyzable condensate B-5 was prepared and evaluated by performing the same operations as those of Synthesis Example B-4 except that the titanium oxide particles No. 2 were changed to the titanium oxide particles No. 3 in Synthesis Example B-4.

### (Synthesis Example B-8)

The hydrolyzable condensate B-8 was prepared and evaluated by performing the same operations as those of Synthesis Example B-4 except that the titanium oxide particles No. 2 were changed to the titanium oxide particles No. 3 in Synthesis Example B-7.

### (Synthesis Examples B-9 to B-11)

The hydrolyzable condensates B-9 to B-11 were each prepared and evaluated by performing the same operations as those of Synthesis Example B-1 except that the titanium oxide particles No. 1 were changed to the titanium oxide particles No. 4, the titanium oxide particles No. 5, or the titanium oxide particles No. 6 in Synthesis Example B-1.

Tables 4-1 and 4-2 below show the results of the evaluation of the hydrolyzable condensates B-1 to B-14.
[Table 4]

**Table 4-1**

| Hydrolyzable condensate No. | B-1 | B-2 | B-3 | B-4 | B-5 | B-6 | B-7 |
|---|---|---|---|---|---|---|---|
| Evaluation B | A | A | B | B | B | A | A |

[Table 5]

**Table 4-2**

| Hydrolyzable condensate No. | B-8 | B-9 | B-10 | B-11 | B-12 | B-13 | B-14 |
|---|---|---|---|---|---|---|---|
| Evaluation B | A | A | B | A | A | B | A |

### (Synthesis Example b-1)

A hydrolyzable condensate b-1 was prepared and evaluated by performing the same operations as those of Synthesis Example B-1 except that titanium oxide particles (trade name: MT-500B, manufactured by TAYCA CORPORATION) subjected to no surface treatment were used instead of the titanium oxide particles No. 1 in Synthesis Example B-1.

### (Synthesis Example b-2)

A hydrolyzable condensate b-2 was prepared and evaluated by performing the same operations as those of Synthesis Example B-1 except that titanium oxide particles (trade name: MT-500B, manufactured by TAYCA CORPORATION) subjected to no surface treatment were used instead of the titanium oxide particles No. 2 in Synthesis Example B-4.

### (Synthesis Example b-3)

A hydrolyzable condensate b-3 was prepared and evaluated by performing the same operations as those of Synthesis Example B-1 except that titanium oxide particles (trade name: MT-500B, manufactured by TAYCA CORPORATION) subjected to no surface treatment were used instead of the titanium oxide particles No. 2 in Synthesis Example B-7.

Table 4-3 below shows the results of the evaluation of the hydrolyzable condensates b-1 to b-3.
[Table 6]

**Table 4-3**

| Hydrolyzable condensate No. | b-1 | b-2 | b-3 |
|---|---|---|---|
| Evaluation B | C | C | C |

### (Example 1)

### (1) Formation and evaluation of conductive elastic layer

[Table 7]

**Table 5**

| Material | Usage |
|---|---|
| Medium high acrylonitrile NBR (trade name: Nipol DN219, central value of a bound acrylonitrile content: 33.5%, central value of a Mooney viscosity: 27, manufactured by Zeon Corporation) | 100 parts |
| Carbon black for color (filler) (trade name: #7360SB, particle diameter: 28 nm, nitrogen adsorption specific surface area: 77 m²/g, DBP absorption: 87 cm³/100 g, manufactured by TOKAI CARBON CO., LTD.) | 48 parts |
| Calcium carbonate (filler) (trade name: NANOX #30, manufactured by MARUO CALCIUM CO., LTD.) | 20 parts |
| Zinc oxide | 5 parts |
| Stearic acid | 1 part |

Materials shown in Table 5 above were mixed with a 6-1 pressure kneader (trade name: TD6-15MDX, manufactured by TOSHIN CO., LTD.) at a filling rate of 70 vol% and the number of revolutions of a blade of 30 rpm for 24 minutes. Thus, an unvulcanized rubber composition was obtained. 4.5 Parts of tetrabenzylthiuram disulfide (trade name: Sanceler TBZTD, manufactured by SANSHIN CHEMICAL INDUSTRY CO., LTD.) as a vulcanization accelerator and 1.2 parts of sulfur as a vulcanizing agent were added to 174 parts by mass of the unvulcanized rubber composition. Then, the mixture was subjected to cutting in the left and right directions at a total of twenty times with open rolls each having a roll diameter of 12 inches at the number of revolutions of a front roll of 8 rpm, the number of revolutions of a back roll of 10 rpm, and a roll interval of 2 mm. After that, the resultant was subjected to tight milling ten times with the roll interval set to 0.5 mm. Thus, a kneaded product I for an elastic layer was obtained.

Next, a cylindrical steel support having a diameter of 6 mm and a length of 252 mm whose surface had been plated with nickel was prepared as a mandrel. A metal- and-rubber-containing thermosetting adhesive (trade name: METALOC U-20, manufactured by TOYOKAGAKU KENKYUSHO CO., LTD.) was applied to a region extending toward both sides by up to 115.5 mm each from the center of the cylindrical surface of the mandrel in its axial direction (region having a total width of 231 mm in the axial direction). The resultant was dried for 30 minutes at a temperature of 80°C, and was then further dried for 1 hour at a temperature of 120 °C.

The kneaded product I was simultaneously extruded into a cylindrical shape having an outer diameter of 8.75 to 8.90 mm by extrusion molding with a crosshead so as to be concentric with the above-mentioned support with the adhesive layer, and then the ends of the resultant were cut. Thus, a conductive elastic roller in which an unvulcanized conductive elastic layer was laminated on the outer periphery of the support was produced. An extruder having a cylinder diameter of 70 mm and a ratio L/D of 20 was used as an extruder, and temperatures at the time of the extrusion were controlled as described below. The temperatures of the head, a cylinder, and a screw were set to 90°C, 90°C, and 90°C, respectively.

Next, the above-mentioned roller was vulcanized with a continuous heating furnace having two zones whose temperatures had been set to different values. The roller was passed through a first zone whose temperature had been set to 80°C for 30 minutes, and was then passed through a second zone whose temperature had been set to 160°C for 30 minutes as in the foregoing. Thus, a vulcanized rubber roller was obtained.

Next, both ends in the width direction of the elastic layer of the above-mentioned rubber roller were cut so that the width of the elastic layer was 232 mm. After that, the surface of the elastic layer was polished with a rotating grindstone. The polishing was performed under the following conditions. The number of revolutions of the rubber roller was set to 333 rpm and the number of revolutions of the grindstone was set to 2,080 rpm. In addition, the polishing time was 12 sec. Thus, an elastic roller 1 having a crown shape with ends diameter of 8.26 mm and a central portion diameter of 8.50 mm, and having a runout of 18 µm was obtained. It should be noted that the surface of the elastic layer had a ten-point average roughness (Rzjis) of 5.5 µm and a micro-rubber hardness of 73°. The micro-rubber hardness is a value measured with a micro-rubber hardness meter (trade name: MD-1 capa Type A, manufactured by KOBUNSHI KEIKI CO., LTD.) under a 25°C, 55%RH measuring environment according to a peak-hold mode. In addition, the ten-point average roughness (Rzjis) was measured in conformity with Japanese Industrial Standard (JIS) B0601.

Further, the runout was measured as described below. The outer diameters of the elastic layer portion of the elastic roller 1 were measured with a high-accuracy laser measuring machine (trade name: LSM-430v, manufactured by Mitutoyo Corporation), and a difference between the maximum outer diameter value and the minimum outer diameter value was defined as an outer diameter difference runout. The measurement was conducted on five arbitrary points in the width direction of the elastic layer of the elastic roller, and the arithmetic average of the outer diameter difference runouts at the respective points was defined as the runout of the elastic roller 1.

### (2) Formation and evaluation of surface layer

5.21 Grams of a solution prepared by diluting an aromatic sulfonium salt (trade name: Adekaoptomer SP-150, manufactured by ADEKA CORPORATION) as a photocationic polymerization initiator with methanol so that the concentration was 10 mass% were added to 100 g of the hydrolyzable condensate B-1. Further, the mixture was diluted with ethanol so that a solid content concentration was 1.3 mass%. Thus, a paint 1 for forming a surface layer was prepared.

Next, the paint 1 for forming a surface layer was applied onto the elastic layer of the elastic roller 1 with a doughnut-shaped ring coating head provided with ejection orifices in its entire inner periphery. Specifically, the elastic roller 1 was held so as to be concentric with the inner peripheral portion of the ring coating head, and then the ring coating head was moved with respect to the elastic roller 1 while the paint 1 for forming a surface layer was ejected from the ring coating head at a rate of 0.020 ml/s. The moving speed was set to 85 mm/s and the total ejection amount of the paint 1 for forming a surface layer was set to 0.065 ml. After the completion of the application, the paint 1 for forming a surface layer applied onto the elastic layer was cured through such irradiation with UV light having a wavelength of 254 nm that an integrated light quantity was 9,000 mJ/cm². Thus, a surface layer was formed. A low-pressure mercury lamp (manufactured by HARISON TOSHIBA LIGHTING CORPORATION) was used for the irradiation with UV light. A charging roller 1 produced as described above was subjected to the following evaluations (evaluations C-1 to C-3).

### (Evaluation C-1) Calculation of surface free energy of surface layer

The contact angles of the surface of the surface layer of the charging roller 1 relative to pure water, diiodomethane, and ethylene glycol were measured with a contact angle-measuring apparatus (trade name; Contact Angle Meter CA-X ROLL Model, manufactured by Kyowa Interface Science Co., Ltd.). Specifically, each solution was dropped with an injection needle manufactured by Kyowa Interface Science Co., Ltd. onto ten sites of the surface of the charging roller 1. After a lapse of 10 seconds from the adhesion of the droplets to the surface, contact angles at the ten points were measured. It should be noted that a droplet diameter in the dropping direction was set to 1.5 mm. In addition, the measurement was performed under an environment having a temperature of 23°C and a relative humidity of 65%. The arithmetic average of the contact angles at eight points excluding the maximum and the minimum from the values for the contact angles at the ten points for each solution was defined as the contact angle of the surface of the charging roller 1 relative to the solution. Next, a surface free energy was calculated with the contact angle of the surface layer relative to each solution on the basis of the Kitazaki-Hata theory. It should be noted that an analytical software (trade name: FAMAS, manufactured by Kyowa Interface Science Co., Ltd.) was used for the calculation.

### (Evaluation C-2) Measurement of dielectric constant

The dielectric constant of the charging roller 1 was measured by using an interface model 1296 for measuring a dielectric constant (trade name: Model 1296, manufactured by Solartorn) and an impedance analyzer (trade name: Model 1260, manufactured by Solartorn) in combination. The measurement was performed at an applied voltage of 3 V and a measuring frequency of 0.1 Hz to 1 MHz. The dielectric constant was calculated from a capacitance when the frequency was 10 Hz by using the thickness at the time of the film formation.

### (Evaluation C-3) Image evaluation

An electrophotographic image was formed with the charging roller 1, and then the resultant image was evaluated. That is, the charging roller 1 and an electrophotographic photosensitive drum were incorporated into a process cartridge capable of integrally supporting the roller and the drum, and then the process cartridge was mounted on a laser beam printer for longitudinally outputting A4 paper (trade name: HP Color LaserJet 4700 Printer, manufactured by Hewlett-Packard Company). The development mode of the laser beam printer is a reversal development mode, and the printer outputs a transfer material at a speed of 164 mm/s and has an image resolution of 600 dpi.

It should be noted that the electrophotographic photosensitive drum is an organic electrophotographic photosensitive drum obtained by forming an organic photosensitive layer having a thickness of 19.0 µm on a support. In addition, the organic photosensitive layer is a laminated photosensitive layer obtained by laminating a charge-generating layer and a charge-transporting layer containing a modified polycarbonate (binder resin) from the side of the support, and the charge-transporting layer serves as the surface layer of the electrophotographic photosensitive drum.

In addition, a polymerized toner having a glass transition temperature of 63°C and a volume-average particle diameter of 6 µm was used as a toner for use in the image formation. The polymerized toner contains toner particles obtained by externally adding silica fine particles and titanium oxide fine particles to particles obtained by the suspension polymerization of a polymerizable monomer system containing a wax, a charge control agent, a dye, styrene, butyl acrylate, and an ester monomer in an aqueous medium. Output electrophotographic images were each such that an alphabet letter "E" having a size of 4 points was formed on A4 size paper so as to have a print percentage of 1%. In addition, the electrophotographic images were formed intermittently. Specifically, the following operation was repeated. Every time two such electrophotographic images as described above were output, the electrophotographic photosensitive drum was rotated for 4 seconds without the output of any electrophotographic image, and then two such electrophotographic images were output again. Thus, a total of 8,000 electrophotographic images were output. Here, the intermittent output of the electrophotographic images means that the extent to which the surface of the charging roller is dirty is apt to be larger than that in the case where image output is continuously performed because the number of times that the charging roller and the electrophotographic photosensitive drum rub against each other increases even when the number of images to be output is kept constant. It should be noted that a process speed was set to 164 mm/s, and the electrophotographic images were formed under a normal-temperature, normal-humidity environment (having a temperature of 25°C and a humidity of 50%RH) and a high-temperature, high-humidity environment (having a temperature of 30°C and a humidity of 80%RH). The output images were evaluated through visual observation every 2,000 sheets by criteria shown in Table 6 below.
[Table 8]

**Table 6**

| Evaluation rank | Definition |
|---|---|
| AA | No defect resulting from charging unevenness due to a product sticking to the surface of the charging roller can be observed. |
| A | Nearly no defect resulting from charging unevenness due to a product sticking to the surface of the charging roller can be observed. |
| B | A defect resulting from charging unevenness due to a product sticking to the surface of the charging roller can be slightly observed. |
| C | A white, line-like, clear defect resulting from charging unevenness due to a product sticking to the surface of the charging roller can be observed. |

### (Examples 2 to 12)

A paint for forming a surface layer was prepared by performing the same operations as those of Example 1 except that the hydrolyzable condensate B-1 in the paint 1 for forming a surface layer used in the formation of the surface layer of Example 1 was changed to any one of the hydrolyzable condensates B-2 to B-12. Then, charging rollers 2 to 12 were each obtained by performing the same operations as those of Example 1 except that any such paint for forming a surface layer was used.

### (Example 13)

A paint for forming a surface layer was prepared by adjusting the dilution with ethanol upon preparation of the paint 1 for forming a surface layer of Example 1 so that the solid content concentration was 3.0 mass%. A charging roller 13 was obtained by performing the same operations as those of Example 1 except that the paint for forming a surface layer was used.

### (Examples 14 and 15)

A paint for forming a surface layer was prepared by performing the same operations as those of Example 1 except that the hydrolyzable condensate B-1 in the paint 1 for forming a surface layer used in the formation of the surface layer of Example 1 was changed to any one of the hydrolyzable condensates B-13 and B-14. Then, a charging roller 14 and a charging roller 15 were each obtained by performing the same operations as those of Example 1 except that any such paint for forming a surface layer was used. Table 7 below shows the results of the evaluation of the charging rollers according to Examples 1 to 15.
[Table 9]

**Table 7**

| Example | Surface free energy (mJ/m² ) | Dielectric constant ε | Image evaluation | | | | | | | | | |
|---|---|---|---|---|---|---|---|---|---|---|---|---|
| | | | Normal-temperature, normal-humidity environment | | | | | High-temperature, high-humidity environment | | | | |
| | | | Initial stage | 2,000 sheets | 4,000 sheets | 6,000 sheets | 8,000 sheets | Initial stage | 2,000 sheets | 4,000 sheets | 6,000 sheets | 8,000 sheets |
| 1 | 25.0 | 13.3 | AA | AA | AA | AA | A | AA | AA | A | A | A |
| 2 | 23.8 | 13.2 | AA | AA | AA | A | A | AA | AA | AA | A | A |
| 3 | 27.6 | 10.8 | AA | AA | A | A | B | AA | A | A | B | C |
| 4 | 24.8 | 14.1 | AA | AA | AA | AA | A | AA | AA | AA | A | A |
| 5 | 26.6 | 13.4 | AA | AA | A | A | B | AA | A | A | B | B |
| 6 | 24.6 | 10.9 | AA | AA | AA | A | A | AA | AA | A | A | A |
| 7 | 28.8 | 8.1 | AA | AA | A | A | B | AA | AA | A | B | B |
| 8 | 31.5 | 7.6 | AA | A | A | B | B | AA | AA | A | B | C |
| 9 | 24.4 | 11.2 | AA | AA | A | A | A | AA | AA | A | A | A |
| 10 | 26.7 | 13.0 | AA | AA | A | B | B | AA | AA | A | B | B |
| 11 | 24.7 | 12.7 | AA | AA | A | A | A | AA | AA | A | A | A |
| 12 | 26.2 | 13.1 | AA | AA | A | A | A | AA | AA | A | A | A |
| 13 | 25.5 | 10.5 | AA | AA | A | A | A | AA | AA | A | A | A |
| 14 | 22.5 | 13.8 | AA | A | A | A | B | AA | A | A | B | B |
| 15 | 34.2 | 6.5 | AA | A | A | B | C | AA | A | A | B | C |

### (Comparative Examples 1 to 3)

A paint for forming a surface layer was prepared by performing the same operations as those of Example 1 except that the hydrolyzable condensate B-1 in the paint 1 for forming a surface layer used in the formation of the surface layer of Example 1 was changed to any one of the hydrolyzable condensates b-1 to b-3. Then, charging rollers 16 to 18 were each obtained by performing the same operations as those of Example 1 except that any such paint for forming a surface layer was used. Table 8 shows the results of the evaluation.
[Table 10]

**Table 8**

| Comparative Example | Surface free energy (mJ/m²) | Dielectric Constant ε | Image evaluation | | | | | | | | | |
|---|---|---|---|---|---|---|---|---|---|---|---|---|
| | | | Normal-temperature, normal-humidity environment | | | | | High-temperature, high-humidity environment | | | | |
| | | | Initial stage | 2,000 sheets | 4,000 sheets | 6,000 sheets | 8,000 sheets | Initial stage | 2,000 sheets | 4,000 sheets | 6,000 sheets | 8,000 sheets |
| 1 | 40.5 | 9.9 | A | B | B | C | C | A | B | C | C | C |
| 2 | 35.9 | 11.2 | A | A | B | B | C | A | A | B | C | C |
| 3 | 37.6 | 7.5 | AA | A | B | B | C | AA | A | B | C | C |

### Reference Signs List

- 101: support
- 102: conductive elastic layer
- 103: surface layer
- 1: electrophotographic photosensitive member
- 2: axis
- 3: charging member
- 4: exposure light
- 5: developing unit
- 6: transferring unit
- 7: cleaning unit
- 8: fixing unit
- 9: process cartridge
- 10: guiding unit
- P: transfer material

## Claims

1. A charging member, comprising:
a support, an elastic layer and a surface layer;
the surface layer comprises a cured product layer of a coating agent comprising a reaction product of
a hydrolyzable silane compound and
titanium oxide particles having hydroxyl groups on surfaces thereof at a content of from 0.7 mass% to 35 mass%, wherein
the hydrolyzable silane compound comprises one or more kinds selected from compounds represented by the following formulae (1) and (2), and at least one kind thereof is the compound represented by the formula (1):
[Chem. 1] Formula (1) R¹-Z-Si-(OR²)₃ Formula (2) R³-Si-(OR⁴)₃
where R¹ represents a cationic polymerizable organic group, Z represents a divalent organic group, R² and R⁴ each independently represents a saturated or unsaturated hydrocarbon group, and R³ represents a substituted or unsubstituted alkyl or aryl group.

2. The charging member according to claim 1, wherein a ratio Si/Ti of the number of Si atoms of the hydrolyzable silane compound to the number of Ti atoms of the titanium oxide particles is from 0.5 to 10.

3. The charging member according to claim 1 or 2, wherein the titanium oxide particles are subjected to an alkali treatment and an acid treatment or to an acid treatment.

4. The charging member according to any one of claims 1 to 3, wherein the surface layer is formed of a polysiloxane to which the titanium oxide fine particles are bonded.

5. A method of producing a charging member comprising a support, an elastic layer, and a surface layer, comprising:
applying, onto the elastic layer, a coating agent comprising a reaction product of
a hydrolyzable silane compound and titanium oxide particles having hydroxyl groups on surfaces thereof at a content of from 0.7 mass% to 35 mass%; and
curing the coating agent applied on the elastic layer by irradiating with an activation energy ray, and forming the surface layer, wherein
the hydrolyzable silane compound comprises one or more kinds selected from compounds represented by the following formulae (1) and (2), and at least one kind thereof is the compound represented by the formula (1):
[Chem. 1] Formula (1) R¹-Z-Si-(OR²)₃ Formula (2) R³-Si-(OR⁴)₃
where R¹ represents a cationic polymerizable organic group, Z represents a divalent organic group, R² and R⁴ each independently represents a saturated or unsaturated hydrocarbon group, and R³ represents a substituted or unsubstituted alkyl or aryl group.

6. An electrophotographic apparatus, comprising:
an electrophotographic photosensitive member; and
the charging member according to any one of claims 1 to 4 placed to contact the electrophotographic photosensitive member.

7. A process cartridge, comprising:
an electrophotographic photosensitive member; and
the charging member according to any one of claims 1 to 4 placed to contact the electrophotographic photosensitive member, wherein
the process cartridge is formed to be detachable from a main body of an electrophotographic apparatus

## Patentansprüche

1. Ladeelement, das umfasst:
einen Träger, eine elastische Schicht und eine Oberflächenschicht;
wobei die Oberflächenschicht eine gehärtete Produktschicht aus einem Beschichtungsmittel umfasst, das ein Reaktionsprodukt aus
einer hydrolisierbaren Silanverbindung und
Titanoxidteilchen mit Hydroxylgruppen auf deren Oberflächen in einem Gehalt von 0,7 Masse% bis 35 Masse% umfasst, wobei
die hydrolisierbare Silanverbindung eine oder mehrere Arten ausgewählt aus Verbindungen, die durch die folgenden Formeln (1) und (2) dargestellt sind, umfasst und zumindest eine Art davon die durch die Formel (1) dargestellte Verbindung ist:
[Chem. 1] Formel (1) R¹-Z-Si-(OR²)₃ Formel (2) R³-Si-(OR⁴)₃
wobei R¹ eine kationische polymerisierbare organische Gruppe darstellt, Z eine divalente organische Gruppe darstellt, R² und R⁴ jeweils unabhängig eine gesättigte oder ungesättigte Kohlenwasserstoffgruppe darstellen und R³ eine substituierte oder unsubstituierte Alkyl- oder Arylgruppe darstellt.

2. Ladeelement nach Anspruch 1, wobei ein Verhältnis Si/Ti der Anzahl an Si-Atomen der hydrolisierbaren Silanverbindung zu der Anzahl an Ti-Atomen in den Titanoxidteilchen von 0,5 bis 10 beträgt.

3. Ladeelement nach Anspruch 1 oder 2, wobei die Titanoxidteilchen einer Alkalibehandlung und einer Säurebehandlung oder einer Säurebehandlung unterzogen sind.

4. Ladeelement nach einem der Ansprüche 1 bis 3, wobei die Oberflächenschicht aus einem Polysiloxan gebildet ist, an welches Titanoxidfeinteilchen gebunden sind.

5. Verfahren zum Herstellen eines Ladeelements, umfassend einen Träger, eine elastische Schicht und eine Oberflächenschicht, umfassend:
Aufbringen, auf die elastische Schicht, eines Beschichtungsmittels, das ein Reaktionsprodukt aus
einer hydrolisierbaren Silanverbindung und
Titanoxidteilchen mit Hydroxylgruppen auf deren Oberflächen in einem Gehalt von 0,7 Masse% bis 35 Masse% umfasst; und
Härten des Beschichtungsmittels, das auf die elastische Schicht aufgetragen ist, durch Bestrahlen mit aktiven Energiestrahlen, und Bilden der Oberflächenschicht, wobei die hydrolisierbare Silanverbindung eine oder mehrere Arten ausgewählt aus Verbindungen, die durch die folgenden Formeln (1) und (2) dargestellt sind, umfasst und zumindest eine Art davon die durch die Formel (1) dargestellte Verbindung ist:
[Chem. 1] Formel (1) R¹-Z-Si-(OR²)₃ Formel (2) R³-Si-(OR⁴)₃
wobei R¹ eine kationische polymerisierbare organische Gruppe darstellt, Z eine divalente organische Gruppe darstellt, R² und R⁴ jeweils unabhängig eine gesättigte oder ungesättigte Kohlenwasserstoffgruppe darstellen und R³ eine substituierte oder unsubstituierte Alkyl- oder Arylgruppe darstellt.

6. Elektrofotografischer Apparat, umfassend:
ein elektrofotografisches fotosensitives Element; und
das Ladeelement nach einem der Ansprüche 1 bis 4, das in Kontakt mit dem elektrofotografischen fotosensitiven Element platziert ist.

7. Prozesskartusche, die umfasst:
ein elektrofotografisches fotosensitives Element; und
das Ladelement nach einem der Ansprüche 1 bis 4, das in Kontakt mit dem elektrofotografischen fotosensitiven Element platziert ist, wobei
die Prozesskartusche so ausgebildet ist, dass sie von einem Hauptkörper eines elektrophotographischen Apparats abnehmbar ist.

## Revendications

1. Élément de charge, comprenant :
un support, une couche élastique et une couche de surface ;
la couche de surface comprenant une couche de produit durci d'un agent de revêtement comprenant un produit de réaction d'un composé silane hydrolysable et de particules d'oxyde de titane portant, sur leur surface, des groupes hydroxyle selon une teneur allant de 0,7 % en masse à 35 % en masse, où
le composé silane hydrolysable comprend un ou plusieurs types de composés sélectionnés parmi des composés représentés par les formules (1) et (2) suivantes, et au moins un type de ces derniers est le composé représenté par la formule (1) :
[Composés chimiques 1] formule (1) R¹-Z-Si-(OR²)₃ formule (2) R³-Si-(OR⁴)₃
où R¹ représente un groupe organique cationique polymérisable, Z représente un groupe organique divalent, R² et R⁴ représentent chacun individuellement un groupe hydrocarbure saturé ou insaturé, et R³ représente un groupe alkyle ou aryle substitué ou non substitué.

2. Élément de charge selon la revendication 1, dans lequel un rapport Si/Ti du nombre d'atomes de Si du composé silane hydrolysable au nombre d'atomes de Ti des particules d'oxyde de titane va de 0,5 à 10.

3. Élément de charge selon la revendication 1 ou 2, dans lequel les particules d'oxyde de titane sont soumises à un traitement alcalin et à un traitement acide ou à un traitement acide.

4. Élément de charge selon l'une quelconque des revendications 1 à 3, dans lequel la couche de surface est formée d'un polysiloxane auquel sont liées les particules fines d'oxyde de titane.

5. Procédé de production d'un élément de charge comprenant un support, une couche élastique et une couche de surface, consistant à :
appliquer, sur la couche élastique, un agent de revêtement comprenant un produit de réaction d'un composé silane hydrolysable et de particules d'oxyde de titane portant, sur leur surface, des groupes hydroxyle selon une teneur allant de 0,7 % en masse à 35 % en masse ; et
durcir l'agent de revêtement appliqué sur la couche élastique par soumission à un rayonnement d'énergie d'activation, et formation de la couche de surface, le composé silane hydrolysable comprenant un ou plusieurs types de composés sélectionnés parmi des composés représentés par les formules (1) et (2) suivantes, et au moins un type de ces derniers est le composé représenté par la formule (1) :
[Composés chimiques 1] formule (1) R¹-Z-Si-(OR²)₃ formule (2) R³-Si-(OR⁴)₃
où R¹ représente un groupe organique cationique polymérisable, Z représente un groupe organique divalent, R² et R⁴ représentent chacun individuellement un groupe hydrocarbure saturé ou insaturé, et R³ représente un groupe alkyle ou aryle substitué ou non substitué.

6. Appareil électrophotographique, comprenant :
un élément électrophotographique photosensible ; et
l'élément de charge selon l'une quelconque des revendications 1 à 4 disposé de façon à entrer en contact avec l'élément électrophotographique photosensible.

7. Cartouche de traitement, comprenant :
un élément électrophotographique photosensible ; et
l'élément de charge selon l'une quelconque des revendications 1 à 4 disposé de façon à entrer en contact avec l'élément électrophotographique photosensible,
la cartouche de traitement étant formée de façon à pouvoir être désolidarisée d'un corps principal d'un appareil électrophotographique.
